# EUROPÄISCHE PATENTSCHRIFT

(11) **EP 0 378 049 B1**
(45) Veröffentlichungstag und Bekanntmachung des Hinweises auf die Patenterteilung: **27.01.1993**
(21) Anmeldenummer: 89810956.6
(22) Anmeldetag: 14.12.1989
(51) Int. Cl.: B01D 19/04

(54) **Alkalibeständiges silikonölfreies Entschäumungsmittel**
Alkali-fast silicon oil-free defoamer
Produit antimousse exempt d'huile silicone et résistant aux alcalis

(30) Priorität: 09.01.1989 CH 58/89; 07.09.1989 CH 3249/89
(43) Veröffentlichungstag der Anmeldung: 18.07.1990
(73) Patentinhaber: CIBA-GEIGY AG, 4002 Basel (CH)
(72) Erfinder: Töpfl, Rosemarie, CH-4143 Dornach (CH); Guth, Christian, CH-4127 Birsfelden (CH)

(56) Entgegenhaltungen:
- EP-A- 0 207 002
- DE-A- 2 250 975
- US-A- 2 965 581
- US-A- 4 230 599
- CHEMICAL ABSTRACTS, Band 106, Nr. 6, März 1987, Seite 116, Zusammenfassung Nr. 86720b, Columbus, Ohio, US; Y. ABE et al.: "Defoaming property of acrylate oligomers"
- CHEMICAL ABSTRACTS, Band 76, Nr. 9, 28. Februar 1972, Seite 268, Zusammenfassung Nr. 44697f, Columbus, Ohio, US

## Beschreibung

Die vorliegende Erfindung betrifft ein alkalibeständiges silikonölfreies Entschäumungsmittel, ein Verfahren zu dessen Herstellung und dessen Verwendung.

Entschäumungsmittel die Silikonöl enthalten, wie sie z.B. in der US-A-4 071 468 beschrieben sind, weisen in alkalischen, wässrigen Systemen eine ungenügende Wirkung auf und führen oft zu einer Fleckenbildung. Aus der EP-B-35702 sind auch Entschäumungsmittel bekannt geworden, welche kein Silikonöl enthalten. Diese Entschäumungsmittel sind aber ungenügend lagerstabil und ergeben wenig stabile Anwendungsflotten.

Es wurden nun Entschäumungsmittel gefunden, welche diese Nachteile nicht aufweisen.

Gegenstand der vorliegenden Erfindung ist somit ein alkalibeständiges, silikonölfreies Entschäumungsmittel, welches dadurch gekennzeichnet ist, dass es
(a) ein Homopolymer eines aliphatischen C₂-C₁₂-Alkylesters der (Meth)-acrylsäure oder ein Copolymer dieses Alkylesters mit einem Di-C₂-C₁₂-Alkylester einer ethylenisch ungesättigten Dicarbonsäure,
(b) einen anionischen oder nicht-ionogenen Emulgator und
(c) ein apolares Lösungsmittel

enthält.

Als Komponente (a) kommen sowohl Copolymere als insbesondere auch Homopolymere in Betracht. Als Monomere dieser Copolymeren sind Ethyl-, n-Butyl- oder 2-Ethyl-n-hexylacrylat oder -methacrylat einerseits sowie Malein- oder Fumarsäure-Ester andererseits bevorzugt, wobei die Acrylate den Methacrylaten gegenüber bevorzugt sind. Bei Copolymeren aus n-Butylacrylat und Maleinsäure-di-C₂-C₈-alkylester liegt das Gewichtsverhältnis vorzugsweise bei 1:1. Homopolymere aus Ethyl-, n-Butyl-, und 2-Ethyl-n-hexylacrylat stehen indessen im Vordergrund des Interesses. Diese an sich bekannten Co- und Homopolymere werden nach Methoden, die an sich ebenfalls bekannt sind, hergestellt. Zur Herstellung der Homopolymere werden die Monomere der angegebenen Art in Gegenwart eines Lösungsmittels polymerisiert. Als Lösungsmittel sind z.B. Di-, Tetra- oder Decahydronaphthalin, ein durch Methyl oder Ethyl substituiertes Benzol, ein Cycloalkanol mit 4 bis 6 Kohlenstoffatomen, ein gegebenenfalls verzweigtes Alkanol mit 6 bis 12 Kohlenstoffatomen, ein Alkylenoxid-addukt des Glycerins oder des Pentaerythrits oder ein C₂-C₈-Alkylester einer geradkettigen oder verzweigten Carbon- oder Hydroxycarbonsäure wie der Milch- und 2-Ethylhexansäure zu erwähnen. Die Monomere werden vorzugsweise in Gegenwart eines Polymerisationskatalysators wie Azobisisobutyronitril oder Peroxyden wie Benzoylperoxyd im allgemeinen bei erhöhten Temperaturen von z.B. 50 bis 100, insbesondere 70 bis 90°C und in inerter Atmosphäre, d.h. unter Verwendung eines Inertgases wie Stickstoff, polymerisiert. Bevorzugt werden die Mengen an Lösungsmittel im allgemeinen so eingesetzt, dass eine 30 bis 60, vorzugsweise 40 bis 50 gewichtsprozentige Lösung der Komponente (a) erhalten wird, wobei vor der Polymerisation die Monomeren im Lösungsmittel gelöst werden und die erhaltene Lösung des Homopolymers mit dem Lösungsmittel oder einem handelsüblichen Kohlenwasserstoffgemisch aus Paraffinen, gegebenenfalls Naphthenen und Aromaten wenn nötig bis zum genannten Gehalt an Homopolymer weiter verdünnt wird. Zur Herstellung der Copolymere werden die Monomere der angegebenen Art dagegen in Abwesenheit eines Lösungsmittels polymerisiert. Die erhaltenen Copolymere werden dann mit den oben angegebenen Lösungsmitteln oder handelsüblichen Kohlenwasserstoffgemischen bis zum angegebenen Prozentgehalt vermischt. Die erhaltene Lösung kann dann zur Herstellung eines erfindungsgemässen Entschäumungsmittels verwendet werden.

Die oben erwähnten Ester werden in an sich bekannter Weise durch Umsetzung der (Meth)acrylsäure bzw. der Dicarbonsäure wie Malein- oder Fumarsäure oder deren Anhydrid mit einem Alkanol mit 2 bis 12 C-Atomen, wie Ethanol, Propanol, Isopropanol, Butanol und dessen Isomere, Amylalkohol und dessen Isomere, n-Hexylalkohol, n-Octylalkohol, Caprylalkohol, 2-Ethylhexanol, 2-Butylhexanol, Trimethylhexanol, n-Decylalkohol und Laurylalkohol hergestellt.

Bevorzugt sind die Umsetzungsprodukte aus Acrylsäure und n-Butylalkohol sowie der Maleinsäure bzw. deren Anyhdrid mit 2-Ethyl-hexanol.

Bei den handelsüblichen Kohlenwasserstoffgemischen handelt es sich insbesondere um aliphatische geradkettige oder verzweigte Kohlenwasserstoffe, die gegebenenfalls mit Naphthenen und Aromaten vermischt sind. Solche Gemische weisen einen hohen Siedebereich von etwa 180 bis etwa 500°C, einen Anilinpunkt von etwa 70 bis etwa 120°C und eine kinematische Viskosität bei 20°C von etwa 1 bis etwa 100 mm²/s auf. Als Beispiele rein aliphatischer Kohlenwasserstoffgemische seien geradkettige Kohlenwasserstoffe mit einem Siedebereich von 170 bis 250°C, einem Anilinpunkt von 80 bis 85°C und einer kinematischen Viskosität bei 25°C von 1,6 bis 2 mm²/s genannt und die als SHELLSOL TD, T oder K® (Handelsmarke, SHELL) erhältlich sind. Als Beispiele rein aliphatischer Kohlenwasserstoffgemische mit verzweigten Ketten seien Gemische mit einem Siedebereich von 110 bis 260°C, einem Anilinpunkt von 75 bis 90°C und einer kinematischen Viskosität bei 25°C von 20 bis 300 mm²/s genannt, die als ISOPAR E, G, H, K, L oder M® (Handelsmarke ESSO) erhältlich sind. Auch Kohlenwasserstoffgemische, die neben Aliphaten noch Naphthene und Aromaten enthalten, z.B. solche aus 45 bis 70 Gewichtsprozent Paraffinen, 25 bis 45 Gewichtsprozent Naphthenen und 5 bis 20, insbesondere 7 bis 9 Gewichtsprozent Aromaten, kommen in Betracht.

Solche Gemische weisen in der Regel einen Siedebereich von 340 bis 470°C, eine kinematische Viskosität bei 20°C von 20 bis 100 mm²/s, einen sogenannten "Pourpoint" von -5 bis -50°C und einen Anilinpunkt von 75 bis 110°C auf. Ein leicht zugängliches, handelsübliches Kohlenwasserstoffgemisch, das in Frage kommt, ist z.B. PROCESSOIL ES 320® (Handelsmarke, ESSO).

Werden solche Gemische zur Herstellung der Komponente (a) eingesetzt, so ist der Zusatz der oben erwähnten Lösungsmittel erforderlich.

Als Komponente (b) kommen Anlagerungsprodukte von Styroloxid an ein C₆-C₂₂-Fettalkoholalkoxilat, und C₆-C₂₂-Fettsäureamide in Betracht. Die Anlagerungsprodukte können als nicht-ionogene unveresterte Produkte oder als anionische veresterte Produkte vorliegen. Als Komponente (b) sind auch Anlagerungsprodukte von 2 bis 6 Mol Ethylen- oder Propylenoxid an 1 Mol besagter Styroloxid-Anlagerungsprodukte zu erwähnen.

Die als Komponente (b) zur Anwendung kommenden Anlagerungsprodukte sind an sich neue Verbindungen, die durch Anlagerung von Styroloxid an Polyalkylenglykolether der Formel 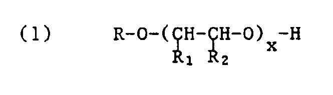
worin
R einen aliphatischen Rest, von R₁ und R₂ das eine Wasserstoff und das andere -CH₃ oder R₁ und R₂ beide Wasserstoff und x eine Zahl von 1 bis 100, vorzugsweise 4 bis 80 bedeuten, erhalten werden können.

Die Anlagerungsprodukte können auch in Form ihrer sauren Ester und deren Salze vorliegen.

Als aliphatischer Rest R kommt vorzugsweise der Kohlenwasserstoffrest eines ungesättigten oder gesättigten aliphatischen Monoalkohols mit 4 bis 22 C-Atomen in Betracht. Dieser Rest kann geradkettig oder verzweigt sein und weist vorzugsweise 8 bis 22 C-Atome auf.

Bei den aliphatischen gesättigten Monoalkoholen handelt es sich z.B. um synthetische und natürliche Alkohole, wie n-Butyl-, Lauryl-, Myristyl-, Cetyl-, Stearyl-, Arachidyl- oder Behenylalkohol sowie um synthetische Alkohole, wie Oxo-Alkohole, z.B. 2-Methylpentanol, 2-Ethylhexanol, 2-Propylheptanol, 2-Octyldodecanol, 1,1,3,3-Tetramethylbutanol, Isononylalkohol, Trimethylhexanol, Trimethylnonylalkohol, Hexadecylalkohol oder die Alfole® (lineare primäre Alkohole) mit 8 bis 18 C-Atomen. Vertreter dieser Alfole sind z.B. Alfol® 810, Alfol® 1012, Alfol® 1214 oder Alfol® 1618.

Ungesättigte aliphatische Monoalkohole sind beispielsweise Dodecenylalkohol, Hexadecenylalkohol oder Oleylalkohol.

Die Alkoholreste können einzeln oder in Form von Gemischen von zwei oder mehreren Komponenten vorhanden sein, wie z.B. Mischungen von Alkyl- und/oder Alkenylgruppen, die sich von Soja-Fettsäuren, Palmkernfettsäuren oder Talg-Oelen ableiten.

(CHR₁-CHR₂-O)ₓ-Ketten sind bevorzugt vom Ethylenglykol-, Propylenethylenglykol- oder Ethylenpropylenglykol-Typus; besonders bevorzugt ist ersterer.

x ist bevorzugt 4 bis 40.

Die Styroloxid-Anlagerungsprodukte werden hergestellt, indem man zuerst den aliphatischen Monoalkohol mit 1 bis 100 Mol Alkylenoxid (Ethylenoxid und/oder Propylenoxid) verethert und dann 1 Mol Styroloxid an den erhaltenen Polyalkylenglykolether anlagert. An diese Anlagerungsprodukte können gewünschtenfalls 2 bis 6 Mole Ethylen- oder Propylenoxid angelagert werden.

Als Beispiele für zur Styroloxidanlagerung benötigte Polyalkylenglykolether, die der Formel (1) entsprechen, seien im einzelnen genannt
- Anlagerungsprodukt von 2,5 Mol Ethylenoxid an 1 Mol C₉-C₁₁-Oxoalkohol
- Anlagerungsprodukt von 4 Mol Ethylenoxid an 1 Mol C₉-C₁₁-Oxoalkohol
- Anlagerungsprodukt von 5 Mol Ethylenoxid an 1 Mol C₉-C₁₁-Oxoalkohol
- Anlagerungsprodukt von 35 Mol Ethylenoxid an 1 Mol Stearylalkohol
- Anlagerungsprodukt von 36 Mol Ethylenoxid an 1 Mol Stearylalkohol
- Anlagerungsprodukt von 18 Mol Ethylenoxid an 1 Mol C₁₂-C₁₈-Fettalkoholgemisch (Cetalol 50-55)
- Anlagerungsprodukt von 10 Mol Ethylenoxid an 1 Mol 2-Ethylhexanol
- Anlagerungsprodukt von 4 Mol Ethylenoxid und 12 Mol Propylenoxid an 1 Mol C₉-C₁₁-Oxoalkohol
- Anlagerungsprodukt von 8 Mol Ethylenoxid und 12 Mol Propylenoxid an 1 Mol C₁₂-C₁₃-Fettalkohol
- Anlagerungsprodukt von 6 Mol Ethylenoxid und 6 Mol Propylenoxid an 1 Mol C₉-C₁₁-Oxoalkohol
- Anlagerungsprodukt von 18 Mol Ethylenoxid an 1 Mol Cetylalkohol
- Anlagerungsprodukt von 3 Mol Ethylenoxid an 1 Mol Isotridecylalkohol
- Anlagerungsprodukt von 9 Mol Ethylenoxid an 1 Mol Iso-tridecylalkohol
- Anlagerungsprodukt von 80 Mol Ethylenoxid an 1 Mol Oleylalkohol
- Anlagerungsprodukt von 10 Mol Ethylenoxid an 1 Mol Iso-tridecylalkohol
- Anlagerungsprodukt von 20 Mol Ethylenoxid an 1 Mol Oleylalkohol
- Anlagerungsprodukt von 3 Mol Ethylenoxid an 1 Mol Laurylalkohol
- Anlagerungsprodukt von 2, 4, 6 oder 15 Mol Ethylenoxid an 1 Mol Nonylalkohol
- Anlagerungsprodukt von 1 oder 2 Mol Ethylenoxid an 1 Mol n-Butylalkohol.

Die sauren Ester können je nach dem Säurerest in Form von Mono-, Diester oder Halbester und als freie Säuren oder vorzugsweise als Salze, z.B. Alkalimetallsalze oder Ammoniumsalze vorliegen. Als Alkalimetallsalze seien insbesondere die Natrium-, Kalium- oder Lithiumsalze und als Ammoniumsalze die Ammonium-, Dimethylammonium-, Trimethylammonium-, Monoethanolammonium-, Diethanolammonium- und Triethanolammoniumsalze genannt. Vorzugsweise werden die sauren Ester als Ammoniumsalze eingesetzt.

Die sauren Ester werden hergestellt, indem man das erfindungsgemässe Styroloxidanlagerungsprodukt mit einer mindestens zweibasischen Sauerstoffsäure umsetzt und gewünschtenfalls den erhaltenen sauren Ester in die obengenannten Salze überführt.

Als mehrbasische Sauerstoffsäuren für die Bildung der sauren Ester können gegebenenfalls sulfonierte, organische, vorzugsweise aliphatische Dicarbonsäuren von 3 bis 6 Kohlenstoffatomen, wie z.B. Maleinsäure, Malonsäure, Bernsteinsäure oder Sulfobernsteinsäure, oder mehrbasische anorganische Sauerstoffsäuren, wie z.B. Schwefelsäure oder Orthophosphorsäure dienen. Anstelle der Säuren können deren funktionelle Derivate wie Säureanhydride, Säurehalogenide, Säureester oder Säureimide verwendet werden. Als Beispiele dieser funktionellen Derivate seien Maleinsäureanhydrid, Chlorsulfonsäure und Sulfaminsäure genannt.

Die Veresterung wird in der Regel durch einfaches Vermischen der Reaktionspartner unter Erwärmen, zweckmässig auf eine Temperatur zwischen 50° und 100°C, durchgeführt. Die zunächst entstehenden, freien Säuren können anschliessend in die entsprechenden Alkalimetall- oder Ammoniumsalze übergeführt werden. Die Ueberführung in die Salze erfolgt auf übliche Weise durch Zugabe von Basen, wie z.B. Ammoniak, Monoethanolamin, Triethanolamin oder Alkalimetallhydroxyde, z.B. Natrium- oder Kaliumhydroxyd. Gemäss einer besonders bevorzugten Ausführungsart werden saure Schwefelsäureester in Form ihrer Ammoniumsalze direkt hergestellt, indem man die Styroloxidanlagerungsprodukte, zweckmässig in Gegenwart von Harnstoff, mit Sulfaminsäure erwärmt.

Praktisch wichtige Styroloxidanlagerungsprodukte entsprechen der Formel 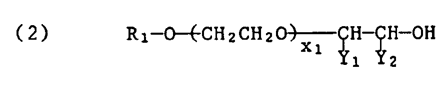
worin
R₁ Alkyl oder Alkenyl je mit 8 bis 22 Kohlenstoffatomen,
von Y₁ und Y₂ eines Phenyl und das andere Wasserstoff und
x₁ 4 bis 80 bedeuten.

Bevorzugte mit einer anorganischen oder organischen Säure hergestellte saure Ester entsprechen der Formel 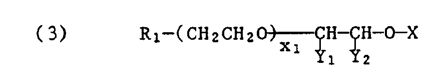
oder
der Formel 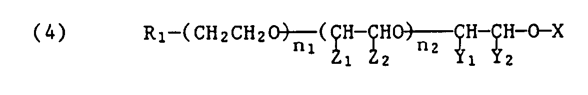
worin R₁, Y₁, Y₂ und x₁ die angegebene Bedeutung haben,
von Z₁ und Z₂ eines Methyl und das andere Wasserstoff,
X den Maleinsäure-, Sulfobernsteinsäure-, Schwefelsäure- oder Phosphorsäurerest und die Summe von n₁ + n₂ 4 bis 30, vorzugsweise 6 bis 18 bedeuten.

Besonders bevorzugte saure Ester der Formeln (3) und (4) enthalten entweder eine Maleinsäureestergruppe oder eine Schwefelsäureestergruppe, die vorzugsweise in Form ihrer Alkalimetallsalze oder Ammoniumsalze vorliegen.

Als Komponente (b) kommen auch C₁-C₄-Alkyl- und besonders C₂-C₁₂-Alkanolamide von Fettsäuren mit 6 bis 22 C-Atomen in Betracht. Bevorzugt sind Fettsäuredialkanolamide mit 8 bis 22 C-Atomen im Fettsäurerest und 2 bis 12 Kohlenstoffatomen im Alkanolrest. Hierbei handelt es sich z.B. um Fettsäure-Alkanolamin-Umsetzungsprodukte, welche aus Fettsäuren mit 8 bis 22, vorzugsweise 8 bis 18 Kohlenstoffatomen, und Alkanolaminen mit vorzugsweise 2 bis 6 Kohlenstoffatomen, wie Aethanolamin, Diäthanolamin, Isopropanolamin oder Di-isopropanolamin hergestellt werden, wobei Diäthanolamin bevorzugt ist. Besonders bevorzugt sind Fettsäurediäthanolamide mit 8 bis 18 Kohlenstoffatomen. Geeignete Fettsäuren sind z.B. Capryl-, Caprin-, Laurin-, Myristin-, Palmitin-, Stearin-, Arachin-, Behen-, Olein-, Linol-, Linolen-, Arachidonsäure oder Kokosfettsäure. Bevorzugte Beispiele derartiger Umsetzungsprodukte sind das Kokosfettsäurediäthanolamid, sowie das Laurinsäure- oder Stearinsäurediäthanolamid.

Als Komponente (c) kommen organische Lösungsmittel in Betracht, wie z.B. aliphatische und aromatische Kohlenwasserstoffe, halogenierte Kohlenwasserstoffe und tertiäre Amine. Bevorzugt sind geradkettige und besonders verzweigte Alkanole mit 6 bis 22 C-Atomen. Von besonderem Interesse sind die in 2-Stellung verzweigten Alkanole, wie z.B. 2-Methylpentanol, 2-Ethylhexanol, 2-Propylheptanol, 2-Butyloctanol, 2-Hexyldecanol, 2-Octyldodecanol und 2-Nonyltridecanol.

Die erfindungsgemässen Entschäumungsmittel können andere in solchen Mitteln üblichen Zusätze enthalten, insbesondere handelsübliche, oberflächenaktive, hydrophile Addukte aus einem Organopolysiloxan und Ethylen und/oder Propylenoxid und weitere anionische Tenside.

Die Organopolysiloxane als Ausgangsprodukt für derartige Addukte entsprechen grundsätzlich den handelsüblichen Silikonölen, wie sie z.B. in den US-A-3 697 440 und 3 793 223 beschrieben sind. Unter diesen Silikonölen stehen wiederum die Polydimethylsiloxane im Vordergrund des Interesses. Die in Frage kommenden Siloxanoxyalkylen-Copolymere können beispielsweise aus halogensubstituierten Organopolysiloxanen, insbesondere Polydimethylsiloxanen und Alkalimetallsalzen von Polyoxyalkylen, z.B. Polyethylen- und/oder Polypropylenglykolen hergestellt werden.

Bei den Siloxanoxyalkylen-Copolymeren handelt es sich um Polyethersiloxane, welche zweckmässigerweise einen Trübungspunkt bei etwa 20 bis 70°C, vorzugsweise 25 bis 50°C aufweisen. Der Glykolgehalt bestehend aus Oxyethylengruppen oder Oxyethylen- und Oxypropylengruppen ist vorteilhafterweise von 35 bis 85, vorzugsweise 40 bis 75 Gewichtsprozent, bezogen auf das gesamte Gewicht des Polyethersiloxans.

Eine bevorzugte Ausführungsform eines solchen Copolymers ist demgemäss ein wasserlösliches Blockpolymer aus einem Polydimethylsiloxan und Ethylenoxyd oder einem Copolymer aus Ethylen- und Propylenoxid, das eine dynamische Viskosität bei 25°C von 500 bis 3000 mPa·s (Brookfield LVT, Spindel 3, 30 U/Min) und einem Trübungspunkt von 20 bis 70°C aufweist.

Solche Blockpolymere bzw. Polyethersiloxane können durch die wahrscheinliche Formel 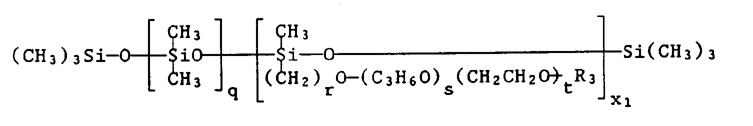
dargestellt werden, worin q 3 bis 50, zweckmässigerweise 3 bis 25, r 2 oder 3, s 0 bis 15, t 1 bis 25, x₁ 3 bis 10 und R₃ Alkyl mit 1 bis 4 Kohlenstoffatomen, vorzugsweise Methyl, sind.

Derartige Polyethersiloxane sind z.B. in den US-A-2 834 748, 3 389 160, 3 505 277, 3 507 815 und 3 629 308 beschrieben.

Weitere Polyethersiloxane, welche als Komponente (d) verwendet werden können, entsprechen der wahrscheinlichen Formel 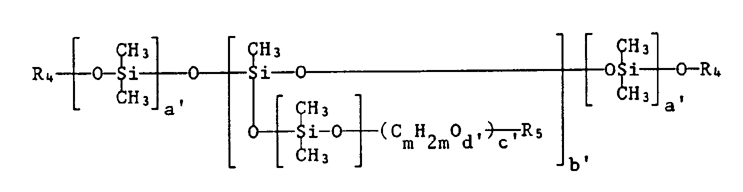
worin R₄ und R₅ je Alkyl mit 1 bis 4 Kohlenstoffatomen, vorzugsweise Methyl, a′ 1 bis 20, b′ 2 bis 20, c′ 1 bis 50, d′ 1 oder 2, vorzugsweise 1, und m 2 bis 5 bedeuten.

Derartige Siloxanverbindungen sind in der US-A-3 183 254 beschrieben.

Als anionische Tenside kommen vorzugsweise Salze von Fettsäuren mit 8 bis 22 C-Atomen in Betracht, wie z.B. die Alkalimetall- oder Ammoniumsalze der Laurin-, Myristin-, Palmitin-, Stearin- und Oelsäure oder ihrer Gemische, wie sie z.B. in den Kokosöl- und Palmkernölsäuren enthalten sind.

Bevorzugte Entschäumungsmittel enthalten
20 bis 60, vorzugsweise 30 bis 55 Gew.% der Komponente (a)
1 bis 10, vorzugsweise 1 bis 5 Gew.% der Komponente (b) und
10 bis 50, vorzugsweise 35 bis 50 Gew.% der Komponente (c).

Besonders bevorzugte Entschäumungsmittel enthalten zusätzlich noch
1 bis 15, vorzugsweise 1 bis 10 Gew. % eines Siloxanoxialkylen-Copolymers und
1 bis 10, vorzugsweise 1 bis 5 Gew. % eines anionischen Tensides.

Die erfindungsgemässen Entschäumungsmittel werden dadurch hergestellt, dass man im allgemeinen die Komponente (a) mit der Komponente (c) homogen vermischt und der entstandenen Mischung die Komponente (b) unter Rühren zugibt.

Die erfindungsgemässen Mittel können zum Entschäumen von wässrigen Systemen verwendet werden. Sie werden in Mengen von 0,2 bis 3, vorzugsweise 0,5 bis 1 g pro Liter wässriges System eingesetzt.

In den folgenden Herstellungs- und Anwendungsbeispielen beziehen sich die Prozentsätze, wenn nicht anders angegeben ist, auf das Gewicht; Teile sind Gewichtsteile.

### Herstellungsbeispiele:

### A) Herstellung der Komponente (a):

### Beispiel 1:

In einem mit Stickstoff gespülten Rührkolben wird ein Gemisch aus 150 g Acrylsäure-n-butylester und 150 g Maleinsäure-di-2-ethylhexylester unter Rühren auf 70°C erwärmt. Alsdann gibt man 0,5 g Azo-di-isobutyronitril zu, wobei die Temperatur auf 75°C ansteigt. Hierauf wird dem Reaktionsgemisch eine Lösung von 750 g Acrylsäure-n-butylester und 750 g Maleinsäure-di-2-ethylhexylester während 3 1/2 Stunden zugetropft. Während dieser Zeit gibt man in Abständen von 30 Minuten 6 mal 0,3 g Azo-bis-isobutyronitril zu. Die Reaktion ist exotherm und die Temperatur steigt auf 115°C an. Nach beendetem Zufluss gibt man 0,5 g Azo-bis-isobutyronitril zu und wiederholt diese Zugabe 3mal nach jeweils 1 Stunde. Anschliessend kühlt man auf 90°C ab und rührt noch 6 Stunden bei dieser Temperatur nach. Man erhält ein Copolymer, dessen Viskosität bei 25°C 31750 mPa·s beträgt.

### Beispiel 2:

In einem mit Stickstoff gespülten Rührkolben werden 75 g Acrylsäure-n-butylester gelöst in 225 g Milchsäure-2-ethylhexylester vorgelegt und auf 75°C erwärmt. Dem Reaktionsgemisch werden 0,5 g Azo-bis-isobutyronitril zugesetzt, wobei die Temperatur des Reaktionsgemisches auf 86°C ansteigt. Hierauf wird dem Reaktionsgemisch innerhalb 4 Stunden eine Lösung von 825 g n-Butylacrylat in 675 g Milchsäure-2-ethylhexylester zugetropft. Während dieser Zeit werden in Abständen von 45 Minuten 5mal 0,3 g Azo-bis-isobutyronitril zugegeben. Die Reaktion ist exotherm und die Temperatur steigt auf 93°C an. Nach beendetem Zufluss gibt man 0,5 g Azo-bis-isobutyronitril zu und wiederholt diese Zugabe 4mal nach jeweils 1 Stunde. Die Temperatur wird bei 90°C gehalten und man rührt noch 6 Stunden bei dieser Temperatur nach. Man erhält eine klare, farblose 50%ige Harzlösung, deren Viskosität bei 25°C 250 mPa·s beträgt.

### Beispiel 3:

Man verfährt wie in Beispiel 2 beschrieben, verwendet jedoch als Lösungsmittel 2-Ethylhexansäure-2-ethylhexylester anstatt Milchsäure-2-ethylhexylester. Man erhält eine klare, farblose 50%ige Harzlösung, deren Viskosität bei 25°C, 1750 mPa·s beträgt.

### Beispiel 4:

In inerter Stickstoffatmosphäre werden 50 Teile Acrylsäureethylester in 50 Teilen 2-Ethyl-n-hexanol gelöst und auf 80°C geheizt. Das Reaktionsgemisch wird während 8 Stunden bei dieser Temperatur unter Stickstoffatmosphäre gehalten, wobei am Beginn der 8-stündigen Reaktionszeit, nach einer und nach zwei Stunden Reaktionszeit dem Reaktionsgemisch jeweils 0,5 Teile Benzoylperoxyd als Katalysator zugesetzt werden. Anschliessend wird das Reaktionsgemisch auf 30°C abgekühlt und mit 25 Teilen 2-Ethyl-n-hexanol verdünnt. Man erhält eine 40%ige klare Lösung des Homopolymerisates in 2-Ethyl-n-hexanol, deren Viskosität bei 25°C 448 mPa·s beträgt.

### Beispiel 5:

In inerter Stickstoffatmosphäre werden 25 Teile Acrylsäure-n-butylester in 25 Teilen 2-Ethyl-n-hexanol gelöst und auf 70°C geheizt. Dem Reaktionsgemisch werden 0,03 Teile Azobisisobutyronitril als Katalysator zugesetzt, wobei die Temperatur des Reaktionsgemisches innerhalb von 4 Minuten von 70°C auf 76°C ansteigt. Hierauf wird dem Reaktionsgemisch innerhalb von 165 Minuten eine Lösung von 125 Teilen Acrylsäure-n-butylester in 125 Teilen 2-Ethyl-n-hexanol zugegeben. Am Beginn der 165-minütigen Zulaufzeit sowie nach 35, 70 und 105 Minuten Zulauf werden dem Reaktionsgemisch jeweils 0,3 Teile Azobisisobutyronitril zugesetzt. Das Reaktionsgemisch wird insgesamt, d.h. vom Beginn des Zulaufs an, während 8 Stunden bei 70° bis 76°C unter inerter Stickstoffatmosphäre gehalten. Anschliessend wird das Reaktionsgemisch auf 25°C abgekühlt. Man erhält eine 50%ige klare Lösung des Homopolymers, deren Viskosität bei 25°C 2008 mPa·s beträgt.

### Beispiel 6:

Man verfährt wie in Beispiel 4 angegeben, setzt jedoch 50 Teile Acrylsäure-2-ethyl-n-hexylester ein und kühlt das Reaktionsgemisch nach der 8-stündigen Reaktionszeit ohne Verdünnung mit 2-Ethyl-n-hexanol auf 25°C ab. Man erhält eine 50%ige, klare Lösung des Homopolymers in 2-Ethyl-n-hexanol, deren Viskosität bei 25°C, 560 mPa·s beträgt.

### Beispiel 7:

Man verfährt wie in Beispiel 4 angegeben, setzt jedoch 50 Teile Acrylsäure-n-butylester und 50 Teile Trimethylbenzol (technisches Isomerengemisch) ein und kühlt das Reaktionsgemisch nach der 8-stündigen Reaktionszeit auf 25°C ab. Man erhält eine 50%ige, klare Lösung des Homopolymers in Trimethylbenzol, deren Viskosität bei 25°C 135 mPa·s beträgt.

### Beispiel 8:

Man verfährt wie in Beispiel 4 angegeben, setzt jedoch 50 Teile Acrylsäure-n-butylester und 50 Teile Trimethylhexanol (technisches Gemisch primärer Iso-Nonanole mit 3,5,5-Trimethylhexanol als Hauptbestandteil) ein und kühlt das Reaktionsgemisch nach der 8-stündigen Reaktionszeit auf 25°C ab. Man erhält eine 50%ige, klare Lösung des Homopolymers in Trimethylhexanol, deren Viskosität bei 25°C 3000 mPa·s beträgt.

### Beispiel 9:

Man verfährt wie in Beispiel 4 angegeben, setzt jedoch 50 Acrylsäure-n-butylester und 50 Teile eines Umsetzungsproduktes aus Glycerin und Propylenoxid (Molekulargewicht des Umsetzungsproduktes: 4000) ein und kühlt das Reaktionsgemisch nach der 8-stündigen Reaktionszeit auf 25°C ab. Man erhält eine 50%ige, klare Lösung des Homopolymers aus dem Addukt aus Glycerin und Propylenoxid, deren Viskosität bei 25°C 2985 mPa·s beträgt.

### Beispiel 10:

Man verfährt wie in Beispiel 4 angegeben, setzt jedoch 50 Teile Acrylsäure-n-butylester und 50 Teile Cyclohexanol ein und kühlt das Reaktionsgemisch nach der 8-stündigen Reaktionszeit auf 25°C ab. Man erhält eine 50%ige, klare Lösung des Homopolymers in Cyclohexanol deren Viskosität bei 25°C 580 mPa·s beträgt.

### Beispiel 11:

In inerter Stickstoffatmosphäre werden 16,7 Teile Acrylsäure-n-butylester in 50 Teilen n-Hexanol gelöst und auf 75°C geheizt. Dem Reaktionsgemisch werden 0,25 Teile Azobisisobutyronitril als Katalysator zugegeben, wobei die Temperatur des Reaktionsgemisches innerhalb von 3 Minuten von 75°C auf 82°C ansteigt. Hierauf wird dem Reaktionsgemisch innerhalb von 2 Stunden eine Lösung von 183,3 Teilen Acrylsäure-n-butylester in 150 Teilen n-Hexanol zugegeben. 45 Minuten und 90 Minuten nach Beginn des Zulaufs und 1 Stunde nach beendetem Zulauf werden dem Reaktionsgemisch jeweils 0,25 Teile Azobisisobutyronitril zugesetzt. Das Reaktionsgemisch wird insgesamt, d.h. vom Beginn des Zulaufs an, während 10 Stunden bei 75° bis 82°C unter inerter Stickstoffatmosphäre gehalten. Anschliessend wird das Reaktionsgemisch auf 25°C abgekühlt. Man erhält eine 50%ige, klare Lösung des Homopolymers, deren Viskosität bei 25°C 248 mPa·s beträgt.

### Beispiel 12:

Man verfährt wie in Beispiel 11 angegeben, setzt jedoch n-Octanol an Stelle von n-Hexanol ein. Man erhält eine 50%ige, klare Lösung des Homopolymers, deren Viskosität bei 25°C, wie in Beispiel 4 gemessen, 440 mPa·s beträgt.

### Beispiel 13:

Man verfährt wie in Beispiel 4 angegeben, setzt jedoch 50 Teile Acrylsäure-n-butylester und 50 Teile eines technischen Gemisches aus geradkettigen, aliphatischen Kohlenwasserstoffen (Siedebereich 186-214°C, kinematische Viskosität bei 25°C 1,8 mm²/s, Anilinpunkt 85°C) ein. Man erhält eine 50%ige Lösung, deren Viskosität bei 25°C 605 mPa·s beträgt.

### Beispiel 14:

Man verfährt wie in Beispiel 4 angegeben, setzt jedoch 50 Teile Acrylsäure-n-butylester und 50 Teile eines technischen Gemisches aus aliphatischen, verzweigte Ketten aufweisenden Kohlenwasserstoffen, (Siedebereich 192-210°C, kinematische Viskosität bei 25°C 21 mm²/s, Anilinpunkt 85°C) ein. Man erhält eine 50%ige Lösung, deren Viskosität bei 25°C 590 mPa·s beträgt.

### B) Herstellung der Komponente (b):

### Beispiel 15:

163,8 g eines Anlagerungsproduktes von 4 Mol Ethylenoxid an 1 Mol C₉-C₁₁-Oxoalkohol (OH-Zahl: 171) werden mit 3,3 g Schwefelsäure (96 %) gemischt und auf 65°C aufgeheizt. Alsdann lässt man 60 g Styroloxid im Verlaufe von 35 Minuten zutropfen, wobei die Temperatur auf 87°C steigt. Anschliessend wird das Reaktionsprodukt 5 Stunden bei 75°C nachgerührt, mit Natriumbicarbonatlösung neutralisiert und filtriert. Das Filtrat wird eingeengt und der Rückstand getrocknet. Man erhält ein gelbliches, klares Produkt der Formel

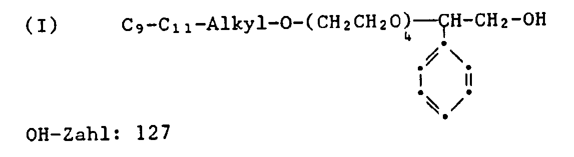

### Beispiel 16:

a) 350 g eines Anlagerungsproduktes von 35 Mol Ethylenoxid an 1 Mol Stearylalkohol (OH-Zahl: 32) werden mit 5,6 g Schwefelsäure (96 %) gemischt und auf 70°C erwärmt. Hierauf lässt man 24 g Styroloxid im Verlaufe von 30 Minuten bei 70-75°C zutropfen. Alsdann wird die Mischung 8 Stunden bei 75°C gerührt und anschliessend mit Natriumbicarbonatlösung neutralisiert und filtriert. Das Filtrat wird eingeengt und der Rückstand getrocknet. Man erhält ein bei Raumtemperatur wachsartiges Produkt der Formel 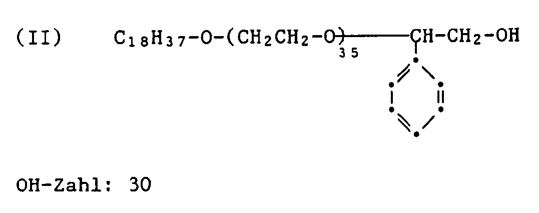
b) 185 g des gemäss (a) hergestellten Produktes der Formel (II) werden auf 70°C erwärmt und mit 10 g Harnstoff vermischt. Nach 15 Minuten gibt man 10 g Sulfaminsäure zu und rührt 1 Stunde bei 80°C und 2 Stunden bei 95°C. Alsdann wird das Reaktionsprodukt mit 307,5 g Wasser verdünnt und bis zur vollständigen Lösung bei 65-70°C gerührt. Man erhält ein bei Raumtemperatur gelartiges Produkt, welches der Formel 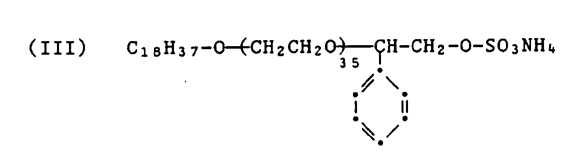 entspricht.

### Beispiel 17:

112 g des gemäss Beispiel 16(a) hergestellten Styroloxidanlagerungsproduktes der Formel (II) werden mit 6,0 g Maleinsäureanhydrid langsam auf 70°C erwärmt und 1 Stunde bei dieser Temperatur gerührt. Hierauf wird die Reaktionsmischung weitere 3 Stunden bei 90°C gerührt. Man erhält ein bei Raumtemperatur wachsartiges Produkt der Formel

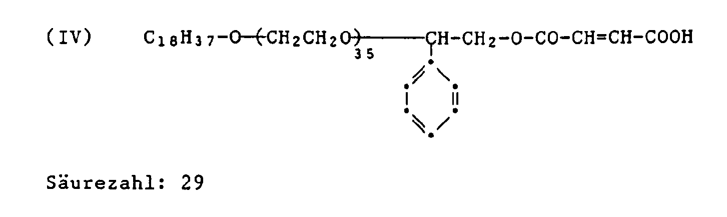

### Beispiel 18:

361 g eines Anlagerungsproduktes von 1 Mol Ethylenoxid an 1 Mol n-Butylalkohol werden zusammen mit 1,84 g Bortrifluorid-Etherat auf 50°C erwärmt. Alsdann lässt man in 1 Stunde 240 g (2 Mol) Styroloxid zutropfen, wobei die Temperatur auf 85°C steigt. Danach rührt man die Mischung 15 Minuten lang bei 85°C und kühlt anschliessend das Reaktionsgemisch auf 20°C. Nach Abdestillation des überschüssigen Ethylenglykolmonobutylethers wird im Hochvakuum fraktioniert destilliert.

Man erhält 230 g eines farblosen Produktes der Formel

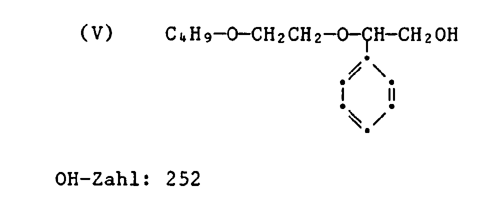

### Beispiel 19:

Zu 66,3 g des gemäss Beispiel 18 hergestellten Umsetzungsproduktes gibt man bei 20°C unter raschem Rühren 14,2 g Phosphorpentoxyd (0,1 Mol). Dabei steigt die Temperatur auf 90°C. Man rührt anschliessend die Mischung bei 20°C während 4 Stunden. Das erhaltene Produkt ist ein braunes, klares und zähflüssiges Gemisch aus den Verbindungen der Formeln 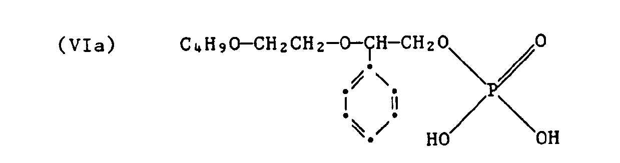
und

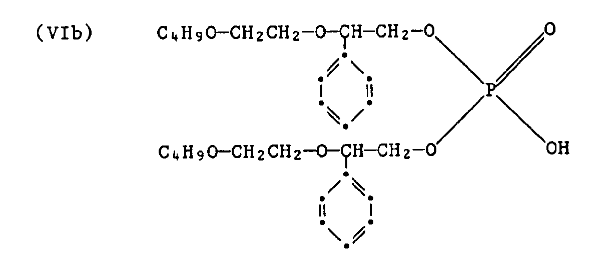

### Beispiel 20:

508 g eines Anlagerungsproduktes von 3 Mol Propylenoxid und 5 Mol Ethylenoxid an 1 Mol Dodecanol (OH-Zahl: 127,5) werden mit 9,7 g Methansulfonsäure gemischt und auf 70°C erwärmt. Hierauf lässt man 138,8 g Styroloxid (1,157 Mol) im Verlaufe von 90 Minuten bei 70-80°C zutropfen. Dann wird die Mischung 3 1/2 Stunden lang bei 80°C gerührt und anschliessend mit Natriumbicarbonat-Lösung neutralisiert und filtriert. Das Filtrat wird eingeengt und der Rückstand getrocknet. Man erhält ein gelbliches, klares Produkt der Formel

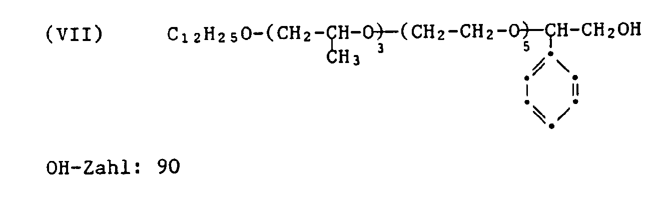

### Beispiel 21:

An 220,4 g Umsetzungsprodukt gemäss Beispiel 15 werden 44 g (1 Mol) Ethylenoxid unter Verwendung von Na-methylat als Katalysator bei 140°C und 5 bar Druck angelagert. Man erhält ein gelbliches, leicht trübes Produkt der Formel

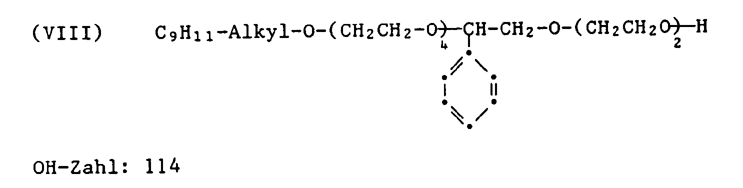

### Beispiel 22:

483 g eines Anlagerungsproduktes von 8 Mol Ethylenoxid an 1 Mol C₉-C₁₁-Oxoalkohol (OH-Zahl: 116) werden mit 9 g Schwefelsäure (96 %) gemischt und auf 65°C erwärmt. Alsdann lässt man 120 g (1 Mol) Styroloxid im Verlaufe von 60 Minuten zutropfen, wobei die Temperatur auf 82°C steigt. Anschliessend wird bei 75°C 5 Stunden lang nachgerührt, mit Natriumbicarbonat-Lösung neutralisiert und filtriert. Das Filtrat wird eingeengt und der Rückstand getrocknet. Man erhält ein gelbliches, klares Produkt der Formel

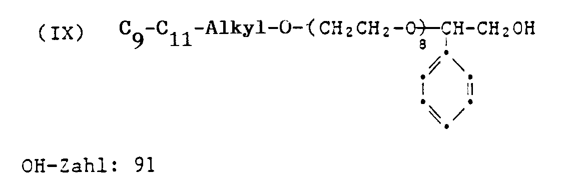

### Beispiel 23:

An 255,5 g des gemäss Beispiel 22 hergestellten Umsetzungsproduktes werden 36,3 g Ethylenoxid (0,83 Mol) unter Verwendung von Na-methylat als Katalysator bei 140°C und 5 bar Druck angelagert. Man erhält ein gelbliches, leicht trübes Produkt der Formel

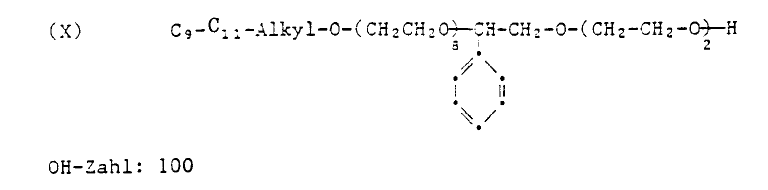

In ähnlicher Weise wie in den Beispielen 15 bis 23 beschrieben erhält man folgende Anlagerungsprodukte der Formeln 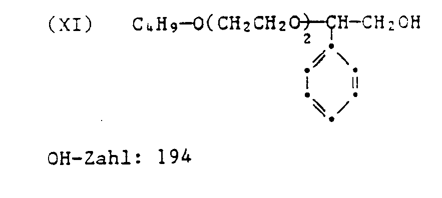 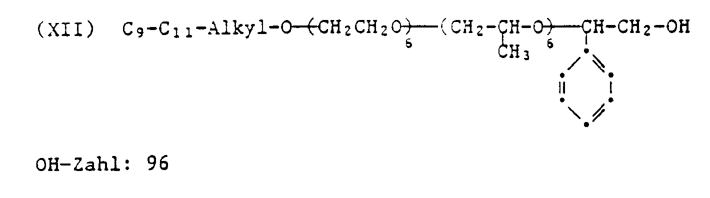 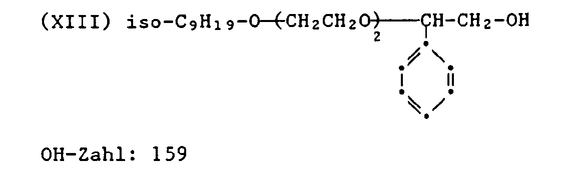 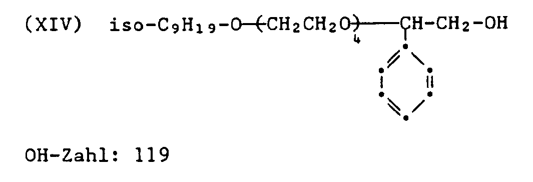 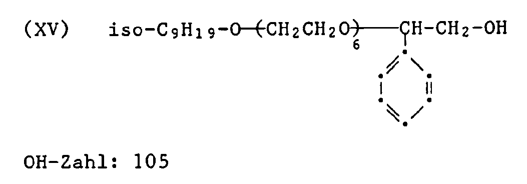 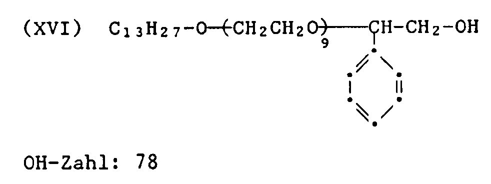 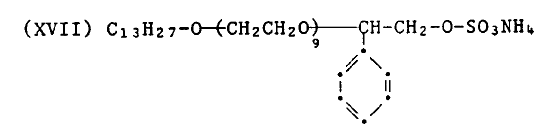 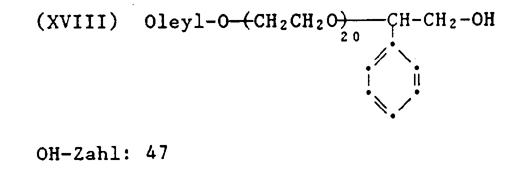 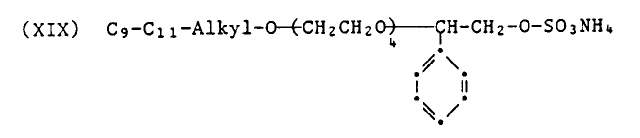 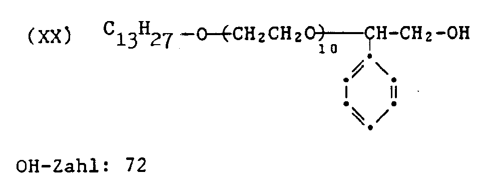 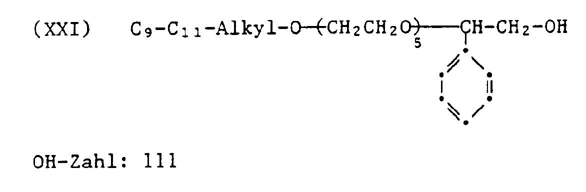 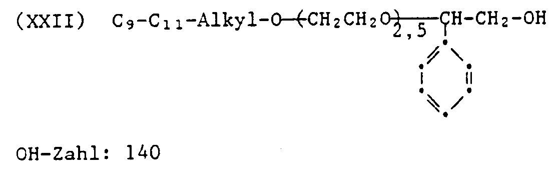 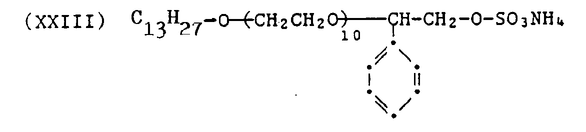 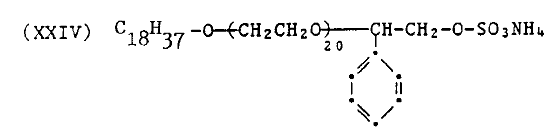 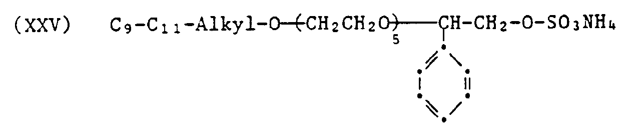 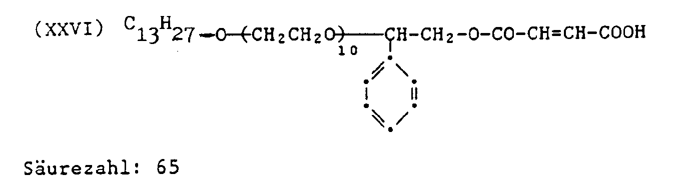 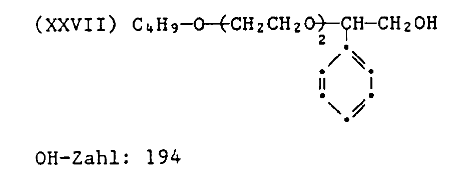 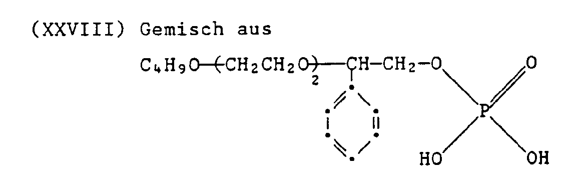
und

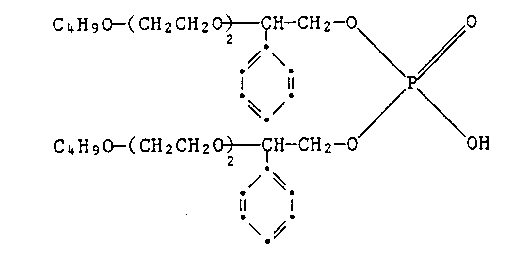

### C) Herstellung der erfindungsgemässen Mittel

### Beispiel 24:

470 g des gemäss Beispiel 1 hergestellten Copolymeren (Komponente (a)) werden mit 390 g Isopalmitylalkohol (Komponente (c)) während 10 Minuten bei 20°C homogen vermischt. Danach werden der homogenen Mischung unter ständigem Rühren 70 g eines ethoxilierten Polydimethylsiloxans und jeweils nach 5 Minuten 35 g Oelsäure und 35 g des Anlagerungsproduktes von 1 Mol Styroloxid an 1 Mol des Adduktes von 9 Mol Ethylenoxid an 1 Mol Isotridecylalkohol (Komponente (b)) zugegeben. Man rührt noch einige Minuten weiter und erhält 1000 g einer gelblichen, klaren Lösung.

### Beispiel 25:

470 g des gemäss Beispiel 1 hergestellten Copolymers (Komponente (a)) werden mit 390 g Isopalmitylalkohol (Komponente (c)) während 10 Minuten bei 20°C homogen vermischt. Danach werden der homogenen Mischung unter ständigem Rühren 70 g eines ethoxilierten Polydimethylsiloxans und jeweils nach 5 Minuten 35 g Oelsäure und 35 g Kokosfettsäurediethanolamid (Komponente (b)) zugegeben. Man rührt noch einige Minuten weiter und erhält 1000 g einer gelblichen, klaren Lösung.

### Beispiel 26:

Verfährt man wie in Beispiel 24 angegeben, setzt jedoch als Komponente (b) 35 g des Anlagerungsproduktes von 1 Mol Styroloxid an 1 Mol des Adduktes von 4 Mol Ethylenoxid an 1 Mol C₉-C₁₁-Oxoalkohol anstelle des in Beispiel 24 beschriebenen Anlagerungsproduktes ein, erhält man 1000 g einer gelblichen und klaren Lösung.

### Beispiel 27:

490 g des gemäss Beispiel 1 hergestellten Copolymeren (Komponente (a)) werden mit 460 g Isopalmitylalkohol (Komponente (c)) während 10 Minuten bei 20°C vermischt. Danach werden der homogenen Mischung unter Rühren 50 g des Anlagerungsproduktes von 1 Mol Styroloxid an 1 Mol des Adduktes von 2 Mol Ethylenoxid an 1 Mol Isononylalkohol zugegeben und noch einige Minuten weitergerührt. Man erhält 1000 g einer klaren gelblichen Lösung.

### Beispiel 28:

525 g des gemäss Beispiel 1 hergestellten Copolymeren (Komponente (a)) werden mit 435 g Isopalmitylalkohol (Komponente (c)) während 10 Minuten bei 20°C vermischt. Danach werden der homogenen Mischung unter Rühren 40 g des Anlagerungsproduktes von 1 Mol Styroloxid an 1 Mol des Adduktes von 2 Mol Ethylenoxid an 1 Mol Isononylalkohol zugegeben und noch einige Minuten weitergerührt. Man erhält 1000 g einer klaren gelblichen Lösung.

### Beispiel 29:

525 g des gemäss Beispiel 5 hergestellten Copolymeren (Komponente (a)) werden mit 435 g Isopalmitylalkohol (Komponente (c)) während 10 Minuten bei 20°C vermischt. Danach werden der homogenen Mischung unter Rühren 40 g des Anlagerungsproduktes von 1 Mol Styroloxid an 1 Mol des Adduktes von 2 Mol Ethylenoxid an 1 Mol Isononylalkohol zugegeben und noch einige Minuten weitergerührt. Man erhält 1000 g einer klaren gelblichen Lösung.

### Anwendungsbeispiele:

### Beispiel 30:

600 g eines Gemisches aus 61 % des Natriumsalzes der Pentadekan-1-sulfonsäure, 8,1 % des Anlagerungsproduktes von 4 Mol Ethylenoxid an 1 Mol eines C₉-C₁₁-Alkanols, 5 % Methyldipropylenglykol, 10 % von teilweise Oligomeren der 1-Hydroxyethan-1,1-diphosphonsäure, 5 % Sorbit und 11 % einer wässrigen 50%igen Kaliumhydroxidlösung werden in 80 Liter Wasser gelöst und mit 10 Liter Natronlauge (30%ig) versetzt. Zum Entschäumen werden dem Gemisch 100 g des gemäss Beispiel 26 hergestellten Mittels zugesetzt und mit Wasser auf 100 Liter gestellt.

Ein Rohbaumwollgewebe von 220 g/m² wird mit der so hergestellten Flotte imprägniert, auf 100 % Flottenaufnahme abgequetscht und mit Sattdampf während 10 Minuten bei 101°C gedämpft. Danach wird heiss und kalt nachgespült, getrocknet und der CIBA-GEIGY-Weissgrad bestimmt, der die Note 10 beträgt (die des rohen, unbehandelten Gewebes -73). Die Abkochflotte wird nun gemäss DIN 53902 auf das Schaumverhalten untersucht und eine Schaumhöhe von 20 ml festgestellt. Bei einer gleichen Flotte aber ohne erfindungsgemässes Mittel beträgt die Schaumhöhe 300 ml.

Verwendet man anstelle des Mittels gemäss Beispiel 26 das Mittel gemäss Beispiel 24, dann beträgt die Schaumhöhe 15 ml.

### Beispiel 31:

Auf einem Kurzflotten-Jet werden 100 kg Baumwolltricot in 600 Liter deionisiertem Wasser bei 40°C eingenetzt. In die Flotte gibt man dann 36 kg Natriumchlorid, 5 kg des Reaktivfarbstoffes der Formel

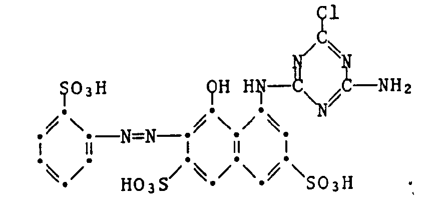

0,6 kg des Adduktes aus 9 Mol Ethylenoxid an 1 Mol p-Nonylphenol sowie 0,6 kg des Antischaummittels gemäss Beispiel 24. Man färbt das Substrat auf dem Kurzflotten-Jet während 45 Minuten bei 40°C. Dann erfolgt der Zusatz von 0,6 kg kalziniertem Natriumcarbonat und nach weiteren 5 Minuten von 1,2 kg einer wässrigen 30%igen Natriumhydroxidlösung. Dann wird das Tricot während weiteren 40 Minuten gefärbt, anschliessend gespült und nachgewaschen. Es resultiert eine echte, egale Rotfärbung des Tricots. Während des Färbeprozesses tritt keine Störung des Warenlaufes auf. Eine Schaumbildung ist nicht festzustellen. Färbt man in gleicher Weise, jedoch ohne Zusatz des Mittels gemäss Beispiel 24 so tritt starkes Schäumen und gegebenenfalls eine Störung im Warenlauf ein.

### Beispiel 32:

100 Teile einer Wirkware aus texturierter Polyesterfaser wird in einer nicht vollgefluteten Jet-Färbeanlage in 1500 Teile 60°C warmem Wasser, welche 2 Teile Ammoniumsulfat und eine feindispergierte Farbstoffmischung folgender Zusammensetzung
2,9 Teile des Farbstoffes C.I. Disperse Yellow 54, C.I. 47020,
2,6 Teile des Farbstoffes C.I. Disperse Red 151, C.I. 26130,
0,8 Teile des Farbstoffes C.I. Disperse Blue 56, C.I. 63285,
2,0 Teile des Ammoniumsalzes des sauren Schwefelsäureesters eines Adduktes aus Glycerin und Propylenoxid mit einem Mol Gew. 4200 und
1,5 Teile des Antischaummittels gemäss Beispiel 26
enthält, und dessen pH mit Ameisensäure auf 5 eingestellt wurde, eingebracht.

Danach wird die Temperatur der Flotte innerhalb 30 Minuten auf 130°C erhöht und weitere 60 Minuten bei dieser Temperatur gefärbt. Während dieser Zeit kann durch das Schauglas der Färbemaschine beobachtet werden, dass die aus den Düsen austretende Flotte keinerlei Schaum enthält. Anschliessend wird die Flotte auf 70°C abgekühlt. Das Substrat wird wie üblich reduktiv gereinigt, gespült und getrocknet.

Man erhält so eine egale Braunfärbung mit einer guten Durchfärbung (Diffusion) und guten Echtheiten.

Ähnlich gute Effekte erhält man auch, wenn anstelle des Antischaummittels gemäss Beispiel 26 das Antischaummittel gemäss Beispiel 24 eingesetzt wird.

## Patentansprüche

1. Alkalibeständiges, silikonölfreies Entschäumungsmittel, dadurch gekennzeichnet, dass es
(a) ein Homopolymer eines aliphatischen C₂-C₁₂-Alkylesters der (Meth)acrylsäure oder ein Copolymer dieses Alkylesters mit einem Di-C₂-C₁₂-Alkylester einer ethylenisch ungesättigten Dicarbonsäure,
(b) einen anionischen oder nicht-ionogenen Emulgator und
(c) ein apolares Lösungsmittel
enthält.

2. Mittel gemäss Anspruch 1, dadurch gekennzeichnet, dass es als Komponente (a) ein Homopolymer eines aliphatischen C₂-C₁₂-Alkylesters der (Meth)acrylsäure enthält.

3. Mittel gemäss Anspruch 2, dadurch gekennzeichnet, dass es als Komponente (a) ein Homopolymer aus n-Butylacrylat enthält.

4. Mittel gemäss Anspruch 1, dadurch gekennzeichnet, dass es als Komponente (a) ein Copolymer aus einem aliphatischen C₂-C₁₂-Alkylester der (Meth)acrylsäure und einem Di-C₂-C₁₂-alkylester einer ethylenisch ungesättigten Dicarbonsäure enthält.

5. Mittel gemäss Anspruch 4, dadurch gekennzeichnet, dass es als Komponente (a) ein Copolymer aus dem Acrylsäure-n-butylester und dem Maleinsäure-di-2-ethylhexylester enthält.

6. Mittel gemäss einem der Ansprüche 1 bis 5, dadurch gekennzeichnet, dass es als Komponente (b) ein Umsetzungsprodukt aus Styroloxid mit einem C₆-C₂₂-Fettalkoholalkoxilat enthält.

7. Mittel gemäss Anpruch 6, dadurch gekennzeichnet, dass es als Komponente (b) ein Umsetzungsprodukt aus Styroloxid und einem C₆-C₂₂-Fettalkoholethoxilat enthält.

8. Mittel gemäss einem der Ansprüche 1 bis 5, dadurch gekennzeichnet, dass es als Komponente (b) ein C₆-C₂₂-Fettsäurealkanolamid enthält.

9. Mittel gemäss einem der Ansprüche 1 und 4 bis 8, dadurch gekennzeichnet, dass es als Komponente (c) ein geradkettiges oder verzweigtes C₆-C₂₂-Alkanol enthält.

10. Mittel gemäss Anspruch 9, dadurch gekennzeichnet, dass es als Komponente (c) ein verzweigtes C₆-C₂₂-Alkanol enthält.

11. Mittel gemäss einem der Ansprüche 1 bis 10, dadurch gekennzeichnet, dass es zusätzlich ein Addukt aus einem Organopolysiloxan und Ethylen- und /oder Propylenoxid enthält.

12. Mittel gemäss Anspruch 11, dadurch gekennzeichnet, dass es ein Blockpolymer aus einem Polydimethylsiloxan und Ethylenoxid oder einem Copolymer aus Ethylen und Propylenoxid, das einen Trübungspunkt von 20 bis 70°C aufweist, enthält.

13. Mittel gemäss einem der Ansprüche 1 bis 12, dadurch gekennzeichnet, dass es zusätzlich eine C₈-C₂₂-Fettsäure bzw. ein Alkalimetallsalz davon enthält.

14. Mittel gemäss Anspruch 1, dadurch gekennzeichnet, dass es
20 bis 60 Gew.% der Komponente (a),
1 bis 10 Gew.% der Komponente (b) und
10 bis 50 Gew.% der Komponente (c)
enthält.

15. Mittel gemäss Anspruch 14, dadurch gekennzeichnet, dass es
30 bis 55 Gew.% der Komponente (a),
1 bis 5 Gew.% der Komponente (b) und
35 bis 50 Gew.% der Komponente (c) enthält.

16. Mittel gemäss Anspruch 14, dadurch gekennzeichnet, dass es zusätzlich 1 bis 15 Gew. % eines Siloxanoxialkylen-Copolymers und 1 bis 10 Gew. % eines anionischen Tensides enthält.

17. Mittel gemäss Anspruch 15, dadurch gekennzeichnet, dass es zusätzlich 1 bis 10 Gew. % eines Siloxanoxialkylen-Copolymers und 1 bis 5 Gew. % eins anionischen Tensides enthält.

18. Verfahren zur Herstellung des Mittels gemäss einem der Ansprüche 1 bis 15, dadurch gekennzeichnet, dass man die Komponente (a) mit der Komponente (c) homogen vermischt und der entstandenen Mischung die Komponente (b) unter Rühren zugibt.

19. Verwendung des Mittels gemäss einem der Ansprüche 1 bis 17 als Entschäumungsmittel in wässrigen Systemen.

20. Verfahren zum Entschäumen wässriger Systeme, dadurch gekennzeichnet, dass man pro Liter wässriges System, 0,2 bis 3 g des Mittels gemäss einem der Ansprüche 1 bis 17 einsetzt.

## Claims

1. An alkali-resistant foam suppressant which is free from silicone oil, containing
(a) a homopolymer of an aliphatic C₂-C₁₂alkyl ester of (meth)-acrylic acid or a copolymer of this alkyl ester with a di-C₂-C₁₂alkyl ester of an ethylenically unsaturated dicarboxylic acid,
(b) an anionic or nonionic emulsifier and
(c) an apolar solvent.

2. An agent according to claim 1, which contains a homopolymer of an aliphatic C₂-C₁₂alkyl ester of (meth)acrylic acid as component (a).

3. An agent according to claim 2, which contains a homopolymer of n-butylacrylate as component (a).

4. An agent according to claim 1, which contains a copolymer of an aliphatic C₂-C₁₂alkyl ester of (meth)acrylic acid and a di-C₂-C₁₂alkyl ester of an ethylenically unsaturated dicarboxylic acid as component (a).

5. An agent according to claim 4, which contains a copoylmer of n-butylacrylate and di-2-ethylhexyl maleate as component (a).

6. An agent according to any one of claims 1 to 5, which contains a reaction product of styrene oxide with a C₆-C₂₂ fatty alcohol alkoxylate as component (b).

7. An agent according to claim 6, which contains a reaction product of styrene oxide and a C₆-C₂₂ fatty alcohol ethoxylate as component (b).

8. An agent according to any one of claims 1 to 5, which contains a C₆-C₂₂ fatty acid alkanolamide as component (b).

9. An agent according to any one of claims 1 and 4 to 8, which contains a straight-chain or branched C₆-C₂₂ alkanol as component (c).

10. An agent according to claim 9, which contains a branched C₆-C₂₂alkanol as component (c).

11. An agent according to any one of claims 1 to 10, which additionally contains an adduct of an organopolysiloxane and ethylene oxide and/or propylene oxide.

12. An agent according to claim 11, which contains a block polymer of a polydimethylsiloxane and ethylene oxide or a copolymer of ethylene and propylene oxide having a turbidity point of 20 to 70°C.

13. An agent according to any one of claims 1 to 12, which additionally contains a C₈-C₂₂fatty acid or an alkali metal salt thereof.

14. An agent according to claim 1, which contains 20 to 60 % by weight of component (a), 1 to 10 % by weight of component (b) and 10 to 50 % by weight of component (c).

15. An agent according to claim 14, which contains 30 to 55 % by weight of component (a), 1 to 5 % by weight of component (b) and 35 to 50 % by weight of component (c).

16. An agent according to claim 14, which additionally contains 1 to 15 % by weight of a siloxanoxialkylene copolymer and 1 to 10 % by weight of an anionic surfactant.

17. An agent according to claim 15, which additionally contains 1 to 10 % by weight of a siloxanoxialkylene copolymer and 1 to 5 % by weight of an anionic surfactant.

18. A process for the preparation of the agent according to any one of claims 1 to 15, which comprises mixing component (a) with component (c) to give a homogeneous mixture and adding component (b) to the resulting mixture, while stirring.

19. The use of the agent according to any one of claims 1 to 17 as a foam suppressant in aqueous systems.

20. A process for suppressing foam in aqueous systems, which comprises using 0.2 to 3 g of the agent according to any one of claims 1 to 17 per litre of aqueous system.

## Revendications

1. Agent anti-mousse résistant aux alcalis, exempt d'huile de silicone, caractérisé en ce qu'il contient :
(a) un homopolymère d'un ester aliphatique d'alkyle en C₂ à C₁₂ de l'acide acrylique ou méthacrylique ou un copolymère de cet ester d'alkyle avec un diester d'alkyle en C₂ à C₁₂ d'un acide dicarboxylique éthyléniquement insaturé,
(b) un émulsifiant anionique ou non-ionique et
(c) un solvant non polaire.

2. Agent selon la revendication 1, caractérisé en ce qu'il contient, en tant que composant (a), un homopolymère d'un ester aliphatique d'alkyle en C₂ à C₁₂ de l'acide acrylique ou méthacrylique.

3. Agent selon la revendication 2, caractérisé en ce qu'il contient, en tant que composant (a), un homopolymère d'acrylate de n-butyle.

4. Agent selon la revendication 1, caractérisé en ce qu'il contient, en tant que composant (a), un copolymère d'un ester aliphatique d'alkyle en C₂ à C₁₂ de l'acide acrylique ou méthacrylique et d'un diester d'alkyle en C₂ à C₁₂ d'un acide dicarboxylique éthyléniquement insaturé.

5. Agent selon la revendication 4, caractérisé en ce qu'il contient, en tant que composant (a), un copolymère d'acrylate de n-butyle et de maléate de di(2-éthylhexyle).

6. Agent selon l'une des revendications 1 à 5, caractérisé en ce qu'il contient, en tant que composant (b), un produit résultant de la réaction d'oxyde de styrène avec un produit d'alcoxylation d'alcool gras en C₆ à C₂₂.

7. Agent selon la revendication 6, caractérisé en ce qu'il contient, en tant que composant (b), un produit résultant de la réaction d'oxyde de styrène avec un produit d'éthoxylation d'alcool gras en C₆ à C₂₂.

8. Agent selon l'une des revendications 1 à 5, caractérisé en ce qu'il contient, en tant que composant (b), un alcanolamide d'acide gras en C₆ à C₂₂.

9. Agent selon l'une des revendications 1 et 4 à 8, caractérisé en ce qu'il contient, en tant que composant (c), un alcanol en C₆ à C₂₂, à chaîne droite ou ramifiée.

10. Agent selon la revendication 9, caractérisé en ce qu'il contient, en tant que composant (c), un alcanol en C₆ à C₂₂, à chaîne ramifiée.

11. Agent selon l'une des revendications 1 à 10, caractérisé en ce qu'il contient en plus un produit d'addition d'un polyorganosiloxane et d'oxyde d'éthylène et/ou d'oxyde de propylène.

12. Agent selon la revendication 11, caractérisé en ce qu'il contient un polymère bloc constitué d'un polydiméthylsiloxane et d'oxyde d'éthylène ou d'un copolymère d'oxyde d'éthylène et d'oxyde de propylène, qui présente un point de trouble de 20 à 70°C.

13. Agent selon l'une des revendications 1 à 12, caractérisé en ce qu'il contient en plus un acide gras en C₈ à C₂₂ ou un sel de métal alcalin d'un tel acide.

14. Agent selon la revendication 1, caractérisé en ce qu'il contient 20 à 60 % en poids du composant (a), 1 à 10 % en poids du composant (b) et 10 à 50 % en poids du composant (c).

15. Agent selon la revendication 14, caractérisé en ce qu'il contient 30 à 55 % en poids du composant (a), 1 à 5 % en poids du composant (b) et 35 à 50 % en poids du composant (c).

16. Agent selon la revendication 14, caractérisé en ce qu'il contient en plus 1 à 15 % en poids d'un copolymère siloxanoxyalkylène et 1 à 10 % en poids d'un tensioactif anionique.

17. Agent selon la revendication 15, caractérisé en ce qu'il contient en plus 1 à 10 % en poids d'un copolymère siloxanoxyalkylène et 1 à 5 % en poids d'un tensioactif anionique.

18. Procédé de préparation de l'agent selon l'une des revendications 1 à 15, caractérisé en ce qu'on mélange le composant (a) avec le composant (c) de façon à obtenir un produit homogène, et ajoute, en agitant, le composant (b) au mélange résultant.

19. Utilisation de l'agent selon l'une des revendications 1 à 17 en tant qu'agent anti-mousse dans des systèmes aqueux.

20. Procédé pour éviter la formation de mousse dans des systèmes aqueux, caractérisé en ce que l'on utilise, par litre de système aqueux, 0,2 à 3 g de l'agent selon l'une des revendications 1 à 17.
